# EUROPÄISCHE PATENTSCHRIFT

(11) **EP 3 807 705 B1**
(45) Veröffentlichungstag und Bekanntmachung des Hinweises auf die Patenterteilung: **06.08.2025**
(21) Anmeldenummer: 19731921.3
(22) Anmeldetag: 13.06.2019
(51) Int. Cl.: G02B 27/01, G02B 6/00, G02B 27/00

(54) **HEAD-UP-DISPLAY FÜR EIN FAHRZEUG**
HEAD-UP DISPLAY FOR A VEHICLE
AFFICHAGE TÊTE HAUTE DESTINÉ À UN VÉHICULE

(30) Priorität: 15.06.2018 DE 102018209626
(43) Veröffentlichungstag der Anmeldung: 21.04.2021
(73) Patentinhaber: Continental Automotive Technologies GmbH, 30175 Hannover (DE)
(72) Erfinder: SCHEFFLER-JUSCHTSCHENKO, Willi, 65824 Schwalbach a. Ts. (DE); MITSCH, Rudolf, 65824 Schwalbach a. Ts. (DE); JACHENS, Arne, 65824 Schwalbach a. Ts. (DE)
(74) Vertreter: Aumovio Corporation
(86) Internationale Anmeldenummer: PCT/EP2019/065546
(87) Internationale Veröffentlichungsnummer: WO 2019/238846

(56) Entgegenhaltungen:
- WO-A1-2016/113873
- WO-A2-2013/009414
- WO-A2-2013/009414
- DE-A1- 102016 115 938
- US-A1- 2013 051 730
- US-A1- 2013 051 730
- US-A1- 2015 160 457
- US-A1- 2015 193 098
- US-A1- 2015 193 098
- US-A1- 2016 124 223
- US-A1- 2016 124 223

## Beschreibung

Die vorliegende Erfindung betrifft ein Head-Up-Display für ein Fahrzeug.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

WO 2013/009414 A2 beschreibt ein optisches Gerät mit einer Bildquelle, einem Abtastspiegel, einem Aktuator und einer Abtaststeuerung. Die Bildquelle gibt ein Bild aus, indem sie gleichzeitig eine zweidimensionale Anordnung von Bildpixeln projiziert, die einen ganzen Teil des Bildes darstellen. Der Abtastspiegel wird in einem optischen Pfad des Bildes positioniert, um das Bild zu reflektieren. Der Aktuator ist mit dem Abtastspiegel gekoppelt, um den Abtastspiegel selektiv um mindestens eine Achse zu verstellen. Die Abtaststeuerung ist mit dem Aktuator gekoppelt, um eine Position des Abtastspiegels um die mindestens eine Achse zu steuern. Die Abtaststeuerung enthält eine Logik zum kontinuierlichen und wiederholten Einstellen der Position des Abtastspiegels, um zu bewirken, dass das Bild über einen Eyeboxbereich abgetastet wird, der größer ist als der gesamte Teil des Bildes.

Die Größe des virtuellen Bildes herkömmlicher Head-Up-Displays wird durch die Größe der Optikeinheit begrenzt. Ein Ansatz zur Vergrößerung des virtuellen Bildes besteht darin, das von der bildgebenden Einheit kommende Licht in einen Lichtwellenleiter einzukoppeln. Das in den Lichtwellenleiter eingekoppelte Licht, das die Bildinformation trägt, wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt, so dass die Bildinformation über die Fläche des Lichtwellenleiters verteilt ausgegeben wird. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

DE 10 2016 115 938 A1 beschreibt eine Vorrichtung zur Dateneinspiegelung, mit einer Wellenleiteranordnung, welche ein diffraktives Einkoppelelement, ein diffraktives Auskoppelelement sowie optional ein Strahlexpansionselement aufweist. Das Expansionselement und das Auskoppelelement weiten einen Lichtstrahl in verschiedene Richtungen auf. Das Einkoppelelement, das Auskoppelelement und das Strahlexpansionselement können als Volumenhologramm realisiert sein.

Um das vom Head-Up-Display erzeugte virtuelle Bild aus verschiedenen Positionen sehen zu können, müssen diese innerhalb der Eyebox liegen, wozu eine große Eyebox zweckdienlich ist. Dazu ist bei einem Head-Up-Display mit Lichtwellenleitertechnik allerdings ein großer Lichtwellenleiter erforderlich. Die Größe des Lichtwellenleiters führt insbesondere bei gekippter Einbaulage im Fahrzeug zu Bauraumanforderungen, die in üblichen Personenkraftwagen schwer zu realisieren sind.

Es ist eine Aufgabe der vorliegenden Erfindung, ein Head-Up-Display für ein Fahrzeug bereitzustellen, bei dem der erforderliche Bauraum reduziert ist.

Diese Aufgabe wird durch ein Head-Up-Display mit den Merkmalen des Anspruchs 1 gelöst. Bevorzugte Ausgestaltungen der Erfindung sind Gegenstand der abhängigen Ansprüche.

Gemäß einem Aspekt der Erfindung weist ein Head-Up-Display für ein Fahrzeug auf:
- eine bildgebende Einheit zum Erzeugen eines Bildes;
- einen zweidimensional vervielfachenden Lichtwellenleiter zum Aufweiten einer Austrittspupille;
- eine Windschutzscheibe, die vom zweidimensional vervielfachenden Lichtwellenleiter kommendes Licht Richtung Auge eines Betrachters reflektiert;
- eine Messeinrichtung zum Bestimmen der Position eines Auges eines Betrachters;
- Mittel zum Anpassen der Position einer Eyebox des Head-Up-Displays, wobei die Mittel zum Anpassen der Position der Eyebox zumindest einen Antrieb zum Bewegen zumindest des zweidimensional vervielfachenden Lichtwellenleiters relativ zur Windschutzscheibe oder zum Bewegen der bildgebenden Einheit relativ zum zweidimensional vervielfachenden Lichtwellenleiter oder eine Anzeigesteuerung zum Anpassen einer Position eines von einem Anzeigeelement der bildgebenden Einheit dargestellten Bildinhalts aufweisen; und
- eine Steuereinheit zum Ansteuern der Mittel zum Anpassen der Position der Eyebox in Abhängigkeit von der Position des Auges des Betrachters.

Die erfindungsgemäße Lösung erlaubt es, den nötigen Bauraum zu reduzieren und so die Attraktivität und Einsatzwahrscheinlichkeit eines auf Lichtwellenleitertechnologie basierenden Head-Up-Displays signifikant zu steigern. Die Verringerung des Bauraums wird dadurch erzielt, dass die zuvor statische Eyebox in ihrer Höhe reduziert wird, wodurch die vertikale Ausdehnung des Lichtwellenleiters verringert werden kann. Um dennoch den notwendigen Bereich für alle Größen an Fahrern abzudecken, ist die Position dieser reduzierten Eyebox durch geeignete Mittel anpassbar. Um keine funktionalen Nachteile gegenüber einer großen, statischen Eyebox zu haben, erfolgt eine automatische Anpassung oder Nachführung der Eyebox entsprechend der aktuellen Kopfposition des Betrachters. Die Steuereinheit ist dazu mit der Messeinrichtung und den Mitteln zum Anpassen der Position der Eyebox in Signalverbindung. Mit der Messeinrichtung wird die Position des Auges des Betrachters bestimmt. Die Steuereinheit prüft, ob sich das Auge noch innerhalb der Eyebox befindet, oder ob einer Korrektur vorzunehmen ist. Ist dies der Fall, so steuert sie die Mittel zum Anpassen der Position der Eyebox an, damit diese die Position der Eyebox so lange nachführen, bis die Eyebox wieder gut bezüglich des Auges positioniert ist.

Ebenfalls im Rahmen der Erfindung liegt es, die Größe der Eyebox in horizontaler Richtung zu reduzieren, wodurch wiederum die horizontale Ausdehnung des Lichtwellenleiters verringert werden kann. Durch die Mittel zum Anpassen der Position der Eyebox kann auch eine Nachführung der Eyebox in horizontaler Richtung entsprechend der Augenposition des Betrachters realisiert werden.

Erfindungsgemäß können die Mittel zum Anpassen der Position der Eyebox eine Anzeigesteuerung zum Anpassen einer Position eines von einem Anzeigeelement der bildgebenden Einheit dargestellten Bildinhalts aufweisen. Bei dieser Ausführungsform ist der optische Aufbau so ausgestaltet, dass ein in Bezug auf die Bildhöhe größeres Bild als üblich in den Lichtwellenleiter eingekoppelt wird. Die Bildhöhe kann z.B. so gewählt sein, dass das resultierende virtuelle Bild für den Betrachter eine Bildhöhe von 5° aufweist. Für die tatsächliche Bilddarstellung wird jedoch nicht die gesamte Höhe des Bildes genutzt, sondern nur ein Teil davon. Beispielsweise können 50% der Bildhöhe genutzt werden, sodass das resultierende virtuelle Bild für den Betrachter eine Bildhöhe von 2,5° aufweist. Die Verschiebung der Eyebox wird nun dadurch erreicht, dass der dargestellte Bildinhalt auf dem Anzeigeelement in vertikaler Richtung verschoben wird. Dazu wird das Bild auf dem Anzeigeelement pixelweise nach oben oder nach unten bewegt, wodurch sich die Winkel der Strahlen ändern, die in den Lichtwellenleiter eingekoppelt werden. Dies führt zur einer vertikalen Verschiebung der Eyebox. Entsprechend kann über teilweise Nutzung der Bildbreite und eine horizontale Verschiebung des auf dem Anzeigeelement dargestellten Bildinhalts auch eine horizontale Verschiebung der Eyebox realisiert werden.

Gemäß einem Aspekt der Erfindung sind die bildgebende Einheit und der zweidimensional vervielfachende Lichtwellenleiter mechanisch unverrückbar miteinander zu einer Einheit gekoppelt und durch den zumindest einen Antrieb gemeinsam bewegbar. Der zumindest eine Antrieb ist dabei vorzugsweise eingerichtet, die Einheit aus bildgebender Einheit und zweidimensional vervielfachendem Lichtwellenleiter horizontal oder vertikal zu verschieben oder um eine horizontale oder vertikale Achse zu verkippen. Diese Variante der erfindungsgemäßen Lösung hat den Vorteil, dass sich die Position der bildgebenden Einheit relativ zum Lichtwellenleiter nicht ändert. Somit sind keine Positionierungsfehler zu erwarten, die gegebenenfalls korrigiert werden müssten. Allerdings müssen verhältnismäßig große Massen bewegt werden, was bei der Auslegung des zumindest einen Antriebs sowie des Systemaufbaus berücksichtigt werden muss. Die Nachführung der Eyebox kann z.B. durch eine Linearbewegung der Einheit aus bildgebender Einheit und zweidimensional vervielfachendem Lichtwellenleiter realisiert werden als. Ebenso können eine Drehbewegung oder geeignete Kombinationen daraus genutzt werden. Wenn die bildgebende Einheit und der zweidimensional vervielfachende Lichtwellenleiter in einem Gehäuse angeordnet sind, kann der Antrieb wahlweise das gesamte Gehäuse bewegen oder die Einheit aus bildgebender Einheit und zweidimensional vervielfachendem Lichtwellenleiter innerhalb des Gehäuses bewegen.

Gemäß einem Aspekt der Erfindung ist der zweidimensional vervielfachende Lichtwellenleiter ortsfest angeordnet und der zumindest eine Antrieb ist eingerichtet, die bildgebende Einheit relativ zum zweidimensional vervielfachenden Lichtwellenleiter zu bewegen. Diese Variante der erfindungsgemäßen Lösung sieht vor, dass die bildgebende Einheit nicht mechanisch unverrückbar mit dem Lichtwellenleiter gekoppelt ist, sondern mittels eines Antriebs relativ zum Lichtwellenleiter beweglich angeordnet ist. Diese Lösung hat den Vorteil, dass nur eine relativ kleine Masse bewegt werden muss. Allerdings muss die Positionierung sehr exakt erfolgen. Um die Eyebox dem Auge nachzuführen, kann die bildgebende Einheit durch den Antrieb horizontal oder vertikal verschoben oder um eine horizontale oder vertikale Achse verkippt werden.

Gemäß einem Aspekt der Erfindung ist die bildgebende Einheit ortsfest angeordnet und der zumindest eine Antrieb ist eingerichtet, den zweidimensional vervielfachenden Lichtwellenleiter relativ zur bildgebenden Einheit zu bewegen. Auch diese Variante der erfindungsgemäßen Lösung sieht vor, dass der Lichtwellenleiter nicht mechanisch unverrückbar mit der bildgebenden Einheit gekoppelt ist, sondern mittels eines Antriebs relativ zur bildgebenden Einheit beweglich angeordnet ist. Bei dieser Lösung ist die zu bewegende Masse ebenfalls reduziert. Um die Eyebox dem Auge nachzuführen, kann der Lichtwellenleiter durch den Antrieb horizontal oder vertikal verschoben oder um eine horizontale oder vertikale Achse verkippt werden.

Gemäß einem Aspekt der Erfindung weist die Messeinrichtung eine Kamera zur Innenraumüberwachung auf. Zur Gewährleistung der Sichtbarkeit der Eyebox wird vorzugsweise auf Headtracking zurückgegriffen, bei dem die Augenposition des Fahrers, d.h. des Betrachters, mittels einer Auswertung von Kamerabildern bestimmt wird. Dazu können die Bilder einer Kamera zur Innenraumüberwachung genutzt werden, die bei aktuellen Fahrzeugen zum Teil bereits vorhanden ist und deren zunehmende Verbreitung zu erwarten ist.

Selbstverständlich können auch Kombination von zwei oder mehr der oben genannten Maßnahmen verwendet werden, um die Position der Eyebox anzupassen.

Vorzugsweise wird ein erfindungsgemäßes Head-Up-Display in einem Fortbewegungsmittel eingesetzt, um ein virtuelles Bild für einen Bediener des Fortbewegungsmittels zu erzeugen. Bei dem Fortbewegungsmittel kann es sich beispielsweise um ein Kraftfahrzeug oder ein Luftfahrzeug handeln. Selbstverständlich kann die erfindungsgemäße Lösung auch in anderen Umgebungen oder für andere Anwendungen genutzt werden, z.B. in Lastkraftwagen, in der Bahntechnik und im ÖPNV, bei Kranen und Baumaschinen, etc.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch eine erste Ausführungsform eines erfindungsgemäßen Head-Up-Displays;
- Fig. 6: zeigt schematisch eine zweite Ausführungsform eines erfindungsgemäßen Head-Up-Displays;
- Fig. 7: zeigt schematisch eine dritte Ausführungsform eines Head-Up-Displays; und
- Fig. 8: zeigt schematisch eine vierte Ausführungsform eines erfindungsgemäßen Head-Up-Displays.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

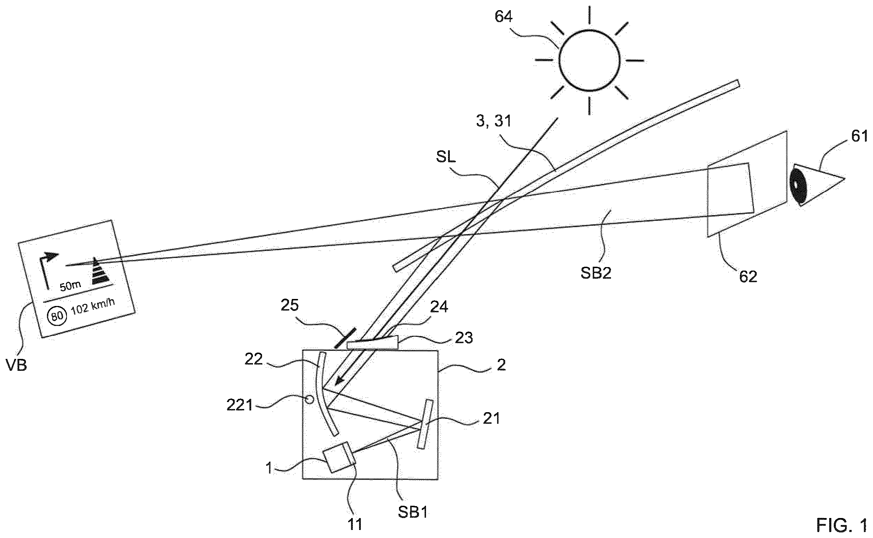

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepasst und sorgt dafür, dass die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie bzw. ein Polarisator 24. Das Anzeigeelement 11 ist typischerweise polarisiert und die Spiegeleinheit 3 wirkt wie ein Analysator. Zweck des Polarisators 24 ist es daher, die Polarisation zu beeinflussen, um eine gleichmäßige Sichtbarkeit des Nutzlichts zu erzielen. Ein Blendschutz 25 dient dazu, das über die Grenzfläche der Abdeckung 23 reflektierte Licht sicher zu absorbieren, sodass keine Blendung des Betrachters hervorgerufen wird. Außer dem Sonnenlicht SL kann auch das Licht einer anderen Störlichtquelle 64 auf das Anzeigeelement 11 gelangen. In Kombination mit einem Polarisationsfilter kann der Polarisator 24 zusätzlich auch genutzt werden, um einfallendes Sonnenlicht SL auszublenden.

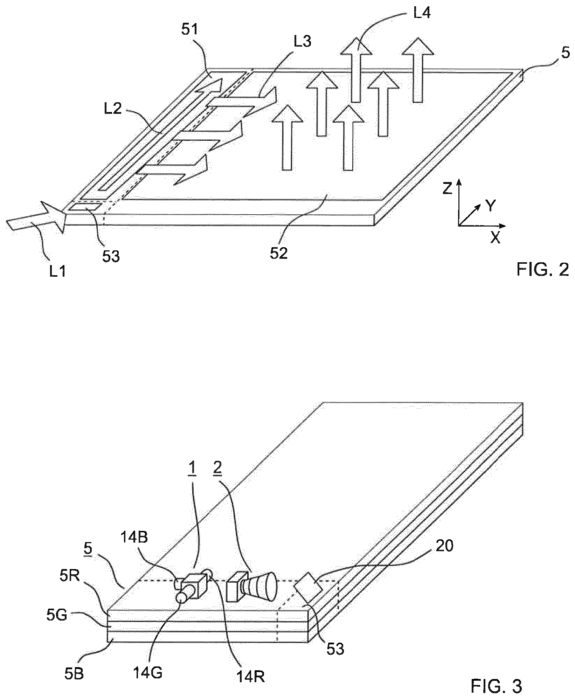

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

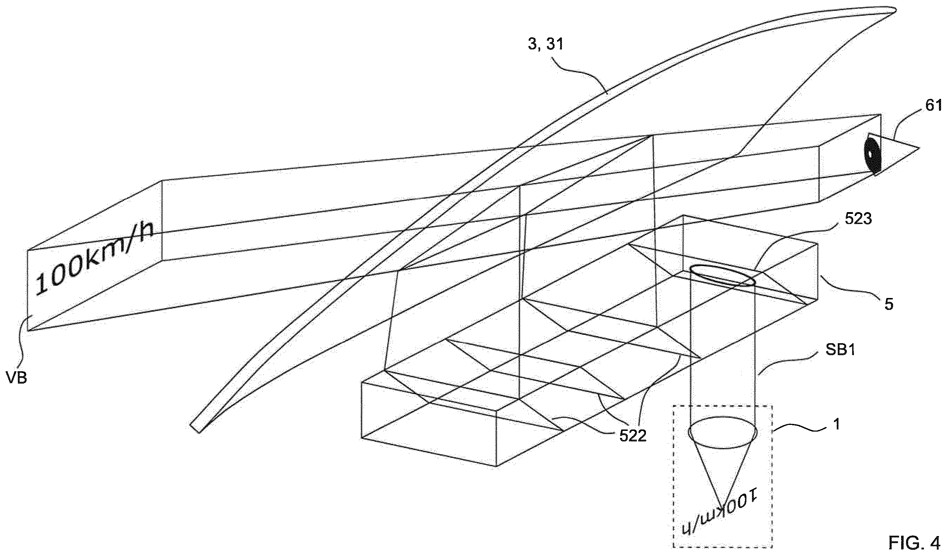

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug. Auch bei dieser Technologie ist die gesamte Optik in einem Gehäuse verbaut, dass von einer transparenten Abdeckung gegen die Umgebung abgegrenzt ist.

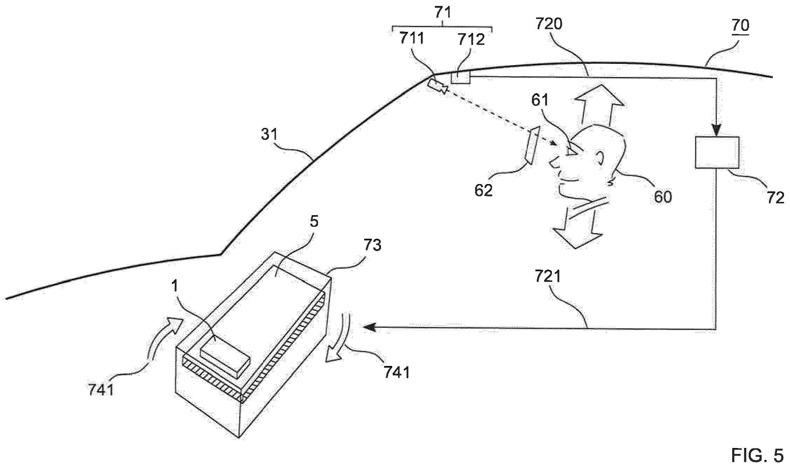

Fig. 5 zeigt schematisch eine erste Ausführungsform eines erfindungsgemäßen Head-Up-Displays für ein Fahrzeug 70. Zu sehen ist die Windschutzscheibe 31 des Fahrzeugs 70. An deren oberen Ende ist eine Kamera 711 mit einer zugehörigen Auswertelektronik 712 angeordnet. Beide Komponenten zusammen bilden die Messeinrichtung 71. Zu sehen ist weiterhin der Betrachter 60, dessen Kopfposition in der Höhe variabel ist, insbesondere in Abhängigkeit von der Größe des Betrachters 60 und von Bewegungen des Betrachters 60. Je nachdem, wie sich der Betrachter 60 bewegt, ist die Kopfposition auch seitlich variabel. Erfindungsgemäß ist vorgesehen, die Position der Eyebox 62 der Position des Betrachters 60 nachzuführen, damit der Betrachter 60 die vom Head-Up-Display angezeigten Informationen immer optimal sieht. Dazu detektiert die Messeinrichtung 71 die Position des Auges 61 des Betrachters 60 und übermittelt diese Information mittels einer ersten Datenleitung 720 an eine Steuereinheit 72. Diese ermittelt geeignete Ansteuersignale, die sie mittels einer weiteren Datenleitung 721 an einen Antrieb 741 weitergibt.

Bei der in Fig. 5 dargestellten ersten Ausführungsform sind die bildgebende Einheit 1 und der Lichtwellenleiter 5 mechanisch unverrückbar miteinander zu einer Einheit gekoppelt und in einem Gehäuse 73 angeordnet. Das Gehäuse 73 ist mittels eines Antriebs 741, der hier durch Pfeile symbolisiert ist, beweglich im Fahrzeug 70 angeordnet. Der Antrieb 741 wird mittels der Datenleitung 721 von der Steuereinheit 72 gesteuert. Dabei wird das Gehäuse 73 derart bewegt, dass sich die Eyebox 62 im Bereich des Auges 61 befindet. Das vom Gehäuse 73 ausgehende Licht trifft somit nach Reflexion an der Windschutzscheibe 31 optimal in das Auge 61.

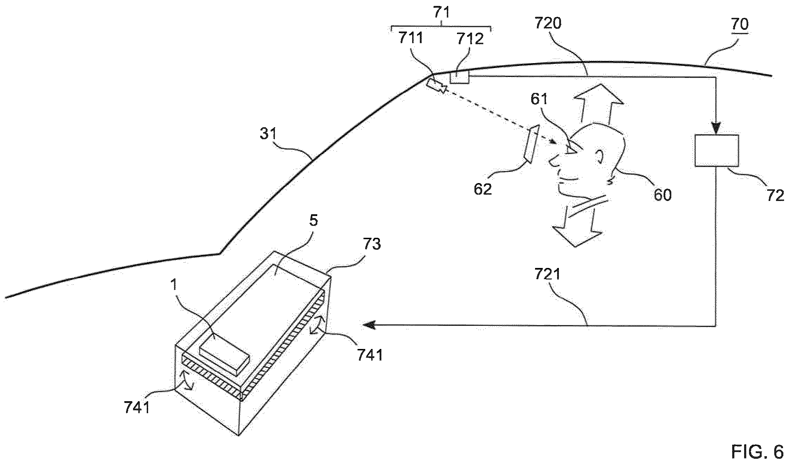

Fig. 6 zeigt schematisch eine zweite Ausführungsform eines erfindungsgemäßen Head-Up-Displays. Auch bei dieser Ausführungsform befinden sich bildgebende Einheit 1 und der Lichtwellenleiter 5 in einem Gehäuse 73 und sind mechanisch unverrückbar miteinander zu einer Einheit gekoppelt. Diese Einheit ist mittels eines durch Pfeile angedeuteten Antriebs 741 beweglich im Gehäuse angeordnet. Der Antrieb 741 wird wiederum mittels der Datenleitung 721 von der Steuereinheit 72 angesteuert. Dabei wird die Einheit aus bildgebender Einheit 1 und Lichtwellenleiter 5 im Gehäuse 73 derart bewegt, dass sich die Eyebox 62 im Bereich des Auges 61 befindet.

Alternativ kann die bildgebende Einheit 1 auch mechanisch vom Lichtwellenleiter 5 entkoppelt sein. Gemäß einer ersten Variante ist die bildgebende Einheit 1 dabei ortsfest im Gehäuse 73 angeordnet, während der Lichtwellenleiter 5 seinerseits mittels des Antriebs 741 relativ zur bildgebenden Einheit 1 beweglich im Gehäuse 73 angeordnet. Gemäß einer zweiten Variante ist hingegen der Lichtwellenleiter 5 ortsfest im Gehäuse 73 angeordnet, während die bildgebende Einheit 1 mittels des Antriebs 741 relativ zum Lichtwellenleiter 5 beweglich im Gehäuse 73 angeordnet ist.

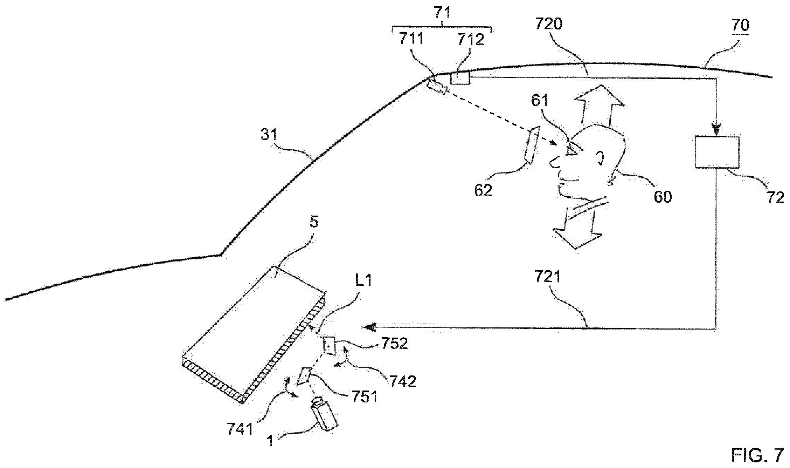

Fig. 7 zeigt schematisch eine dritte Ausführungsform eines Head-Up-Displays. Hier sind die bildgebende Einheit 1 und der Lichtwellenleiter 5 ohne Gehäuse dargestellt. Das von der bildgebenden Einheit 1 kommende Licht L1 wird von zwei beweglichen Spiegeln 751, 752 reflektiert und dann in den Lichtwellenleiter 5 eingekoppelt. Der erste Spiegel 751 wird von einem hier nur angedeuteten Antrieb 741 bewegt, der zweite Spiegel 752 von einem ebenfalls nur angedeuteten Antrieb 742. Die Antriebe 741, 742 werden mittels der Datenleitung 721 von der Steuereinheit 72 angesteuert. Mit Hilfe der beiden beweglichen Spiegel 751, 752 kann der Winkel des einzukoppelnden Lichts L1 geändert werden, wodurch eine geeignete Nachführung der Eyebox 62 erreicht werden kann.

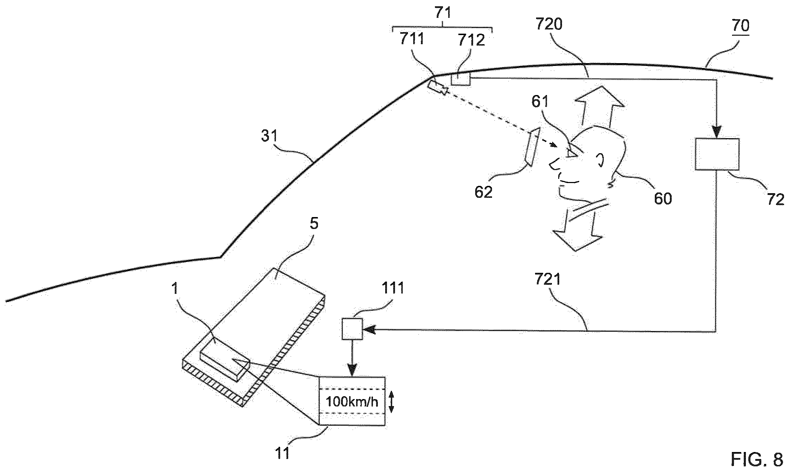

Fig. 8 zeigt schematisch eine vierte Ausführungsform eines erfindungsgemäßen Head-Up-Displays. Wie schon in Fig. 7 sind die bildgebende Einheit 1 und der Lichtwellenleiter 5 ohne Gehäuse dargestellt. Die bildgebende Einheit 1 weist ein Anzeigeelement 11 auf, das so ausgestaltet ist, dass ein in Bezug auf die Bildhöhe größeres Bild als üblich in den Lichtwellenleiter 5 eingekoppelt wird. Das Anzeigeelement 11 ist in Fig. 8 zur Verdeutlichung des Prinzips dieser Ausführungsform gesondert dargestellt. Die Bildhöhe kann z.B. so gewählt sein, dass das resultierende virtuelle Bild für den Betrachter eine Bildhöhe von 5° aufweist. Für die tatsächliche Bilddarstellung wird jedoch nicht die gesamte Höhe des Bildes genutzt, sondern nur ein Teil davon. Beispielsweise können 50% der Bildhöhe genutzt werden, sodass das resultierende virtuelle Bild für den Betrachter eine Bildhöhe von 2,5° aufweist. Zum Anpassen der Position der Eyebox 62 wird eine Anzeigesteuerung 111 genutzt, die für eine Anpassung der Position des von dem Anzeigeelement 11 dargestellten Bildinhalts sorgt. Die Verschiebung der Eyebox 62 in vertikaler Richtung wird dadurch erreicht, dass der dargestellte Bildinhalt auf dem Anzeigeelement 11 in vertikaler Richtung verschoben wird. Dazu wird das Bild auf dem Anzeigeelement 11 pixelweise nach oben oder nach unten bewegt, wodurch sich die Winkel der Strahlen ändern, die in den Lichtwellenleiter 5 eingekoppelt werden. Entsprechend kann über teilweise Nutzung der Bildbreite und eine horizontale Verschiebung des auf dem Anzeigeelement 11 dargestellten Bildinhalts auch eine horizontale Verschiebung der Eyebox 62 realisiert werden.

## Patentansprüche

1. Head-Up-Display für ein Fahrzeug (70), mit:
- einer bildgebenden Einheit (1) zum Erzeugen eines Bildes;
- einem zweidimensional vervielfachenden Lichtwellenleiter (5, 5R, 5G, 5B) zum Aufweiten einer Austrittspupille; und
- einer Windschutzscheibe (31), die vom zweidimensional vervielfachenden Lichtwellenleiter (5, 5R, 5G, 5B) kommendes Licht Richtung Auge (61) eines Betrachters (60) reflektiert;
**dadurch gekennzeichnet, dass** das Head-Up-Display ferner aufweist:
- eine Messeinrichtung (71) zum Bestimmen der Position eines Auges (61) eines Betrachters (60);
- Mittel (111, 741, 742) zum Anpassen der Position einer Eyebox (62) des Head-Up-Displays, wobei die Mittel (11, 741, 742) zum Anpassen der Position der Eyebox (62) zumindest einen Antrieb (741, 742) zum Bewegen zumindest des zweidimensional vervielfachenden Lichtwellenleiters (5, 5R, 5G, 5B) relativ zur Windschutzscheibe (31) oder zum Bewegen der bildgebenden Einheit (1) relativ zum zweidimensional vervielfachenden Lichtwellenleiter (5, 5R, 5G, 5B) oder eine Anzeigesteuerung (111) zum Anpassen einer Position eines von einem Anzeigeelement (11) der bildgebenden Einheit (1) dargestellten Bildinhalts aufweisen; und
- eine Steuereinheit (72) zum Ansteuern der Mittel (111, 741, 742) zum Anpassen der Position der Eyebox (62) in Abhängigkeit von der Position des Auges (61) des Betrachters (60).

2. Head-Up-Display gemäß Anspruch 1, wobei die bildgebende Einheit (1) und der zweidimensional vervielfachende Lichtwellenleiter (5, 5R, 5G, 5B) mechanisch unverrückbar miteinander zu einer Einheit gekoppelt sind und durch den zumindest einen Antrieb (741, 742) gemeinsam bewegbar sind.

3. Head-Up-Display gemäß Anspruch 2, wobei der zumindest eine Antrieb (741, 742) eingerichtet ist, die Einheit aus bildgebender Einheit (1) und zweidimensional vervielfachendem Lichtwellenleiter (5, 5R, 5G, 5B) horizontal oder vertikal zu verschieben oder um eine horizontale oder vertikale Achse zu verkippen.

4. Head-Up-Display gemäß Anspruch 2 oder 3, wobei die bildgebende Einheit (1) und der zweidimensional vervielfachende Lichtwellenleiter (5, 5R, 5G, 5B) in einem Gehäuse (731) angeordnet sind und der zumindest eine Antrieb (741, 742) eingerichtet ist, das Gehäuse (731) zu bewegen oder die Einheit aus bildgebender Einheit (1) und zweidimensional vervielfachendem Lichtwellenleiter (5, 5R, 5G, 5B) innerhalb des Gehäuses (731) zu bewegen.

5. Head-Up-Display gemäß Anspruch 1, wobei der zweidimensional vervielfachende Lichtwellenleiter (5, 5R, 5G, 5B) ortsfest angeordnet ist und der zumindest eine Antrieb (741, 742) eingerichtet ist, die bildgebende Einheit (1) relativ zum zweidimensional vervielfachenden Lichtwellenleiter (5, 5R, 5G, 5B) zu bewegen.

6. Head-Up-Display gemäß Anspruch 5, wobei der zumindest eine Antrieb (741, 742) eingerichtet ist, die bildgebende Einheit (1) horizontal oder vertikal zu verschieben oder um eine horizontale oder vertikale Achse zu verkippen.

7. Head-Up-Display gemäß Anspruch 1, wobei die bildgebende Einheit (1) ortsfest angeordnet ist und der zumindest eine Antrieb (741, 742) eingerichtet ist, den zweidimensional vervielfachenden Lichtwellenleiter (5, 5R, 5G, 5B) relativ zur bildgebenden Einheit (1) zu bewegen.

8. Head-Up-Display gemäß Anspruch 7, wobei der zumindest eine Antrieb (741, 742) eingerichtet ist, den zweidimensional vervielfachenden Lichtwellenleiter (5, 5R, 5G, 5B) horizontal oder vertikal zu verschieben oder um eine horizontale oder vertikale Achse zu verkippen.

## Claims

1. Head-up display for a vehicle (70), comprising:
- a picture generating unit (1) for generating an image;
- a two-dimensionally multiplying optical waveguide (5, 5R, 5G, 5B) for expanding an exit pupil; and
- a windscreen (31) that reflects light coming from the two-dimensionally multiplying optical waveguide (5, 5R, 5G, 5B) in the direction of an eye (61) of an observer (60);
**characterized in that** the head-up display furthermore comprises:
- a measuring device (71) for determining the position of an eye (61) of an observer (60);
- means (111, 741, 742) for adapting the position of an eyebox (62) of the head-up display, wherein the means (11, 741, 742) for adapting the position of the eyebox (62) comprise at least one drive (741, 742) for moving at least the two-dimensionally multiplying optical waveguide (5, 5R, 5G, 5B) relative to the windscreen (31) or for moving the picture generating unit (1) relative to the two-dimensionally multiplying optical waveguide (5, 5R, 5G, 5B) or a display controller (111) for adapting a position of an image content represented by a display element (11) of the picture generating unit (1); and
- a control unit (72) for controlling the means (111, 741, 742) for adapting the position of the eyebox (62) depending on the position of the eye (61) of the observer (60).

2. Head-up display according to Claim 1, wherein the picture generating unit (1) and the two-dimensionally multiplying optical waveguide (5, 5R, 5G, 5B) are coupled to one another in a mechanically immovable manner to form a unit and are jointly movable by the at least one drive (741, 742).

3. Head-up display according to Claim 2, wherein the at least one drive (741, 742) is configured to displace the unit composed of picture generating unit (1) and two-dimensionally multiplying optical waveguide (5, 5R, 5G, 5B) horizontally or vertically or to tilt it about a horizontal or vertical axis.

4. Head-up display according to Claim 2 or 3, wherein the picture generating unit (1) and the two-dimensionally multiplying optical waveguide (5, 5R, 5G, 5B) are arranged in a housing (731) and the at least one drive (741, 742) is configured to move the housing (731) or to move the unit composed of picture generating unit (1) and two-dimensionally multiplying optical waveguide (5, 5R, 5G, 5B) within the housing (731).

5. Head-up display according to Claim 1, wherein the two-dimensionally multiplying optical waveguide (5, 5R, 5G, 5B) is arranged in a stationary manner and the at least one drive (741, 742) is configured to move the picture generating unit (1) relative to the two-dimensionally multiplying optical waveguide (5, 5R, 5G, 5B).

6. Head-up display according to Claim 5, wherein the at least one drive (741, 742) is configured to displace the picture generating unit (1) horizontally or vertically or to tilt it about a horizontal or vertical axis.

7. Head-up display according to Claim 1, wherein the picture generating unit (1) is arranged in a stationary manner and the at least one drive (741, 742) is configured to move the two-dimensionally multiplying optical waveguide (5, 5R, 5G, 5B) relative to the picture generating unit (1).

8. Head-up display according to Claim 7, wherein the at least one drive (741, 742) is configured to displace the two-dimensionally multiplying optical waveguide (5, 5R, 5G, 5B) horizontally or vertically or to tilt it about a horizontal or vertical axis.

## Revendications

1. Affichage tête haute destiné à un véhicule (70), comprenant :
- une unité d'imagerie (1) servant à générer une image ;
- une fibre optique (5, 5R, 5G, 5B) de multiplication bidimensionnelle servant à élargir une pupille de sortie ; et
- un pare-brise (31) qui réfléchit la lumière provenant de la fibre optique (5, 5R, 5G, 5B) de multiplication bidimensionnelle en direction de l'œil (61) d'un observateur (60) ;
**caractérisé en ce que** l'affichage tête haute comporte en outre :
- un dispositif de mesure (71) servant à déterminer la position d'un œil (61) d'un observateur (60) ;
- des moyens (111, 741, 742) servant à adapter la position d'une boîte à œil (62) de l'affichage tête haute, les moyens (11, 741, 742) servant à adapter la position de la boîte à œil (62) comportant au moins un actionneur (741, 742) servant à déplacer au moins la fibre optique (5, 5R, 5G, 5B) de multiplication bidimensionnelle par rapport au pare-brise (31) ou à déplacer l'unité d'imagerie (1) par rapport à la fibre optique (5, 5R, 5G, 5B) de multiplication bidimensionnelle ou un dispositif de commande d'affichage (111) servant à adapter une position d'un contenu d'image représenté par un élément d'affichage (11) de l'unité d'imagerie (1) ; et
- une unité de commande (72) servant à piloter les moyens (111, 741, 742) qui servent à adapter la position de la boîte à œil (62) en fonction de la position de l'œil (61) de l'observateur (60).

2. Affichage tête haute selon la revendication 1, dans lequel l'unité d'imagerie (1) et la fibre optique (5, 5R, 5G, 5B) de multiplication bidimensionnelle sont couplées mécaniquement de manière fixe l'une à l'autre en une unité et peuvent être déplacées ensemble par l'au moins un actionneur (741, 742).

3. Affichage tête haute selon la revendication 2, dans lequel l'au moins un actionneur (741, 742) est conçu pour décaler l'unité constituée de l'unité d'imagerie (1) et de la fibre optique (5, 5R, 5G, 5B) de multiplication bidimensionnelle horizontalement ou verticalement ou pour l'incliner autour d'un axe horizontal ou vertical.

4. Affichage tête haute selon la revendication 2 ou 3, dans lequel l'unité d'imagerie (1) et la fibre optique (5, 5R, 5G, 5B) de multiplication bidimensionnelle sont disposées dans un boîtier (731) et l'au moins un actionneur (741, 742) est conçu pour déplacer le boîtier (731) ou pour déplacer l'unité constituée de l'unité d'imagerie (1) et de la fibre optique (5, 5R, 5G, 5B) de multiplication bidimensionnelle à l'intérieur du boîtier (731).

5. Affichage tête haute selon la revendication 1, dans lequel la fibre optique (5, 5R, 5G, 5B) de multiplication bidimensionnelle est disposée de manière fixe et l'au moins un actionneur (741, 742) est conçu pour déplacer l'unité d'imagerie (1) par rapport à la fibre optique (5, 5R, 5G, 5B) de multiplication bidimensionnelle.

6. Affichage tête haute selon la revendication 5, dans lequel l'au moins un actionneur (741, 742) est conçu pour décaler l'unité d'imagerie (1) horizontalement ou verticalement ou pour l'incliner autour d'un axe horizontal ou vertical.

7. Affichage tête haute selon la revendication 1, dans lequel l'unité d'imagerie (1) est disposée de manière fixe et l'au moins un actionneur (741, 742) est conçu pour déplacer la fibre optique (5, 5R, 5G, 5B) de multiplication bidimensionnelle par rapport à l'unité d'imagerie (1).

8. Affichage tête haute selon la revendication 7, dans lequel l'au moins un actionneur (741, 742) est conçu pour décaler la fibre optique (5, 5R, 5G, 5B) de multiplication bidimensionnelle horizontalement ou verticalement ou pour l'incliner autour d'un axe horizontal ou vertical.
